# EUROPEAN PATENT SPECIFICATION

(11) **EP 1 860 332 B1**
(45) Date of publication and mention of the grant of the patent: **10.08.2011**
(21) Application number: 06010524.4
(22) Date of filing: 22.05.2006
(51) Int. Cl.: F16B 13/12

(54) **Method of forming an expansion mounting sleeve and the product thereof**
Verfahren zur Herstellung eines Spreizhülsendübels und entsprechendes Produkt
Procédé de fabrication d'une cheville à douille d'expansion et produit correspondant

(43) Date of publication of application: 28.11.2007
(73) Proprietor: HSU, Fu-Chuan, Yang-Mei Taoyuan Hsien (TW)
(72) Inventor: HSU, Fu-Chuan, Yang-Mei Taoyuan Hsien (TW)
(74) Representative: Bergmann, Michael

(56) References cited:
- EP-A1- 0 192 914
- DE-A1- 10 007 626
- GB-A- 258 892
- US-A- 1 452 514

## Description

### FIELD OF THE INVENTION

The present invention relates to an expansion mounting sleeve, and more particularly to an expansion mounting sleeve that can be driven or mounted in a hole on a wall and be expanded to firmly locate in the hole when a matching ready-made bolt is screwed thereinto.

### BACKGROUND OF THE INVENTION

The currently commercially available expansion bolt assemblies and associated mounting nuts are manufactured in different manners, such as injection molding plastic materials, casting zinc, lead, or aluminum alloys, turning cutting rods to form bolts and cold forging pipes to form expansion sleeves, and cold forging rods to form bolts and stamping sheet metal to form expansion sleeves.

All these conventional expansion bolt assemblies and mounting nuts require complicate processing apparatus and a lot of parts, as well as relatively high quantity of material to produce them. And, the conventional expansion bolt assemblies, like UK 258 892, or mounting nuts tend to fail in fastening because the expansion sleeves thereof fail to expand as desired, causing the bolts or the mounting nuts to idle without being tightened against the expansion sleeves.

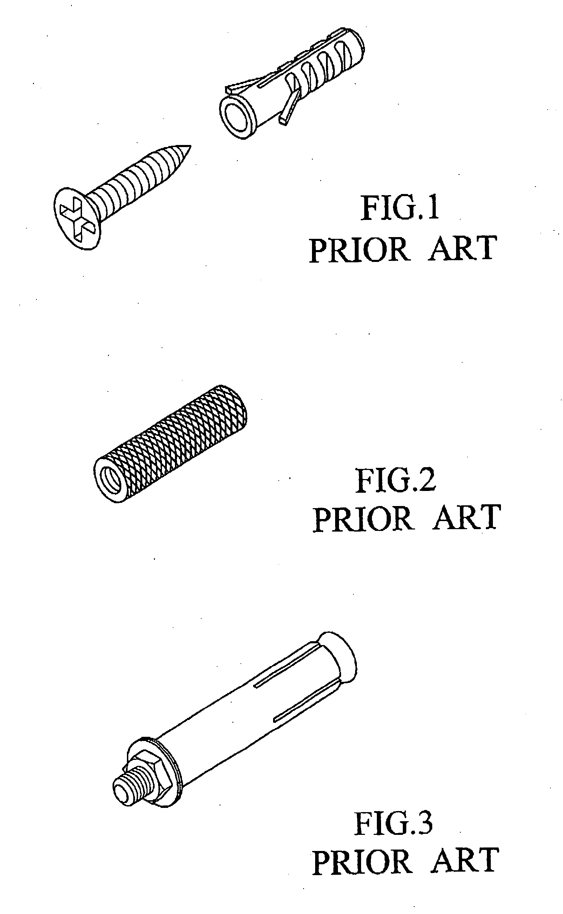

Fig. 1 shows a first conventional expansion mounting screw assembly formed from a plastic material. The plastic expansion screw assembly has the advantages of low material cost and resistant to rust, but requires high cost for molds and has low production speed. The plastic expansion screw assembly also has low rigidity as well as small engaging friction with wall, and accordingly, weaktensile strength and bearing strength. Therefore, the expansion sleeve of the plastic expansion mounting screw assembly tends to be easily pulled out of the wall.

The conventional expansion mounting nuts cast by alloys require longer time to produce and involve a lot of tools and processing procedures, including tapping, assembling, etc. The major disadvantages of the cast alloy expansion mounting nuts include a limited range of usable materials and a mechanical strength lower than the products made of a cold-rolled metal strip material.

Fig. 2 shows a conventional turning cut expansion sleeve or mounting nut for an expansion bolt assembly, which requires longer time to produce a primary body and form grooves on the primary body in secondary processing. A lot of material is waste in turning cut. The turning cut expansion sleeve must be used with a taper-headed bolt to achieve the expansion of the sleeve. Another disadvantage is the tuning cut expansion sleeve is often made of high speed steel, which has a resistance too high to allow successful expansion of the sleeve, resulting in idling of the bolt or the nut against the expansion sleeve without effectively achieving the fastening operation. This type of expansion bolt assembly is therefore not suitable for use in assembling work pieces, erecting construction works, or assembling DIY (do-it-yourself) products.

A conventional expansion bolt assembly including a cold-forged metal bolt and a turning cut metal sleeve is currently most widely used in civil works, restoration, hanging, equipment installation and positioning, etc. The bolt is taper-headed, and the sleeve is processed to form slits thereon. This type of expansion bolt assembly also includes a flat wash, an expansion washer, and a nut, and may be handled in two ways. In the first way, first moves the nut to a rear end of the bolt, then, drive the expansion bolt assembly into a hole pre-drilled on a wall surface, and then tighten the nut, so that the taper-headed bolt expands the forced forward slit sleeve. The sleeve of this type of expansion bolt assembly frequently fails to expand due to a high resistance, resulting in idling when the nut is tightened against the bolt. In the second way, first move the nut to a rear end of the bolt, then, drive the expansion bolt assembly into a hole pre-drilled on a wall surface, and then release the nut and the expansion washer from the bolt. Thereafter, use a sleeve larger than the bolt to force the slit metal sleeve forward, so that tapered head of the bolt forces the slit metal sleeve to expand and achieve the purpose of tightly fastening the expansion bolt assembly to the wall. However, since the pre-drilled hole is often incorrect in depth, or biased, or too soft at the bottom thereof, the metal sleeve tends to move too much forward or the bolt tends to idle. In addition, this type of expansion bolt assembly includes a lot of associated parts and requires good skill to handle it to avoid failure in mounting it.

Fig. 3 shows a further conventional expansion bolt assembly that is an improved version of the above-described type of expansion bolt assembly, and mainly includes a cold-forged bolt and an expansion sleeve formed by stamping. Forming the expansion sleeve by stamping may advantageously reduce the manufacturing cost and lower the resistance to expansion so as to increase the engaging friction of the sleeve with the wall. The stamped expansion sleeve is expanded by forcing or screwing the taper-headed bolt into the sleeve. This improved type of expansion bolt assembly still has the drawbacks of including too many parts and requiring longer time to assemble the parts together.

It is therefore tried by the inventor to overcome the drawbacks existed in the conventional expansion bolt assemblies by developing an independent expansion mounting sleeve formed by stamping using progressive dies through simple and less processing procedures, so that the expansion mounting sleeve has the advantages of requiring less material to form it, having an internally threaded bore to ensure tight screwing of a matching ready-made bolt into it to expand the sleeve without the risk of idling, having a plurality of differently sized and shaped and outward protruded engaging teeth to ensure firm and frictional contact of the expanded sleeve with the wall without the risk of becoming loosened or being pulled out, and largely reducing the tools and costs for manufacturing it.

### SUMMARY OF THE INVENTION

A primary object of the present invention is to provide an expansion mounting sleeve that can be quickly manufactured using a variety of materials with reduced material quantity through simple processing procedures.

Another object of the present invention is to provide an expansion mounting sleeve that can be conveniently used with a ready-made bolt having matching length, size, and screw threads; so that the apparatus and tools needed to produce the expansion mounting sleeve can be largely simplified.

A further object of the present invention is to provide an expansion mounting sleeve that can be easily handled by a person with general skill to successfully complete the fastening work within a shortened time period.

A still further object of the present invention is to provide an expansion mounting sleeve that could be efficiently driven into or mounted in a wall without the risk of becoming loosened.

To achieve the above and other objects, the expansion mounting sleeve of the present invention includes a forward tapered cylindrical body formed by stamping and pressing a cold-rolled metal strip to define an internally threaded tapered bore. A plurality of engaging teeth having different heights and shapes are formed to project from the cylindrical body. After the sleeve has been driven into or mounted in a hole pre-drilled on a wall, a ready-made bolt having length, size, and screw threads matching the threaded bore of the cylindrical body may be screwed into the bore and thereby expands the forward tapered cylindrical body of the sleeve, causing the engaging teeth to extend outward and tightly engage with the wall in the hole, so as to firmly hold the expansion mounting sleeve in place in the hole.

The expansion mounting sleeve of the present invention is formed by stamping and pressing using progressive dies. A method of manufacturing the expansion mounting sleeve includes the following steps:
(a) preparing a piece of material having dimensions needed to manufacture the expansion mounting sleeve, forming at least two tapered areas on the material, and defining thread forming areas on the material;
(b) pressing the material to form more than one slot in the thread forming areas, such that the slots are parallel to an axis of the material;
(c) pressing the material to form at least one barb and/or more than one outward protruded engaging teeth in each of the tapered areas, the engaging teeth have heights that increase toward a front end of the material;
(d) pressing the material to form screw threads of a desired size in the thread forming areas;
(e) pressing the material to form at least one degree of bending at the tapered areas;
(f) pressing the thread forming areas to form a U-sectioned shape;
(g) further curling the thread forming areas into a circular cross section; and
(h) trimming off unnecessary temporary connecting material belt to complete one unit of the expansion mounting sleeve.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of a conventional expansion mounting screw assembly;
Fig. 2 is a perspective view of a sleeve of another conventional expansion bolt assembly;
Fig. 3 is a perspective view of a further conventional expansion bolt assembly;
Fig. 4 is a perspective view of an expansion mounting sleeve according to a preferred embodiment of the present invention;
Fig. 5 is a perspective view of the expansion mounting sleeve of Fig. 4 with a bolt screwed thereinto;
Figs. 6 to 9 show the manner of screwing a bolt into a wall surface via the expansion mounting sleeve of the present invention;
Figs. 10A to 10H show the steps included in a method of forming the expansion mounting sleeve of the present invention.

### DETAILED DESCRIPTION OF THE PREFERRED EMBODIMENTS

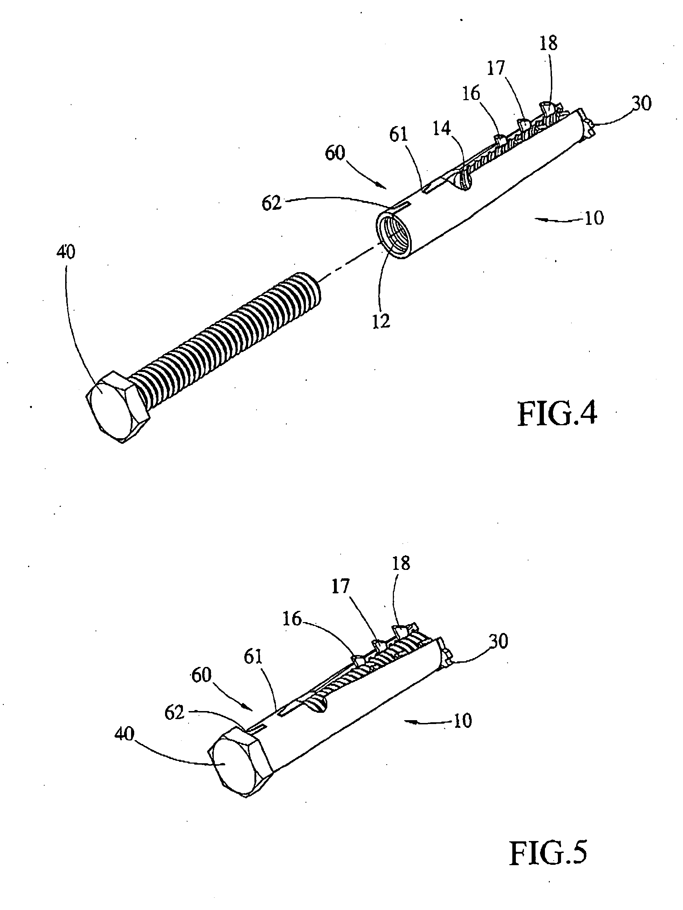

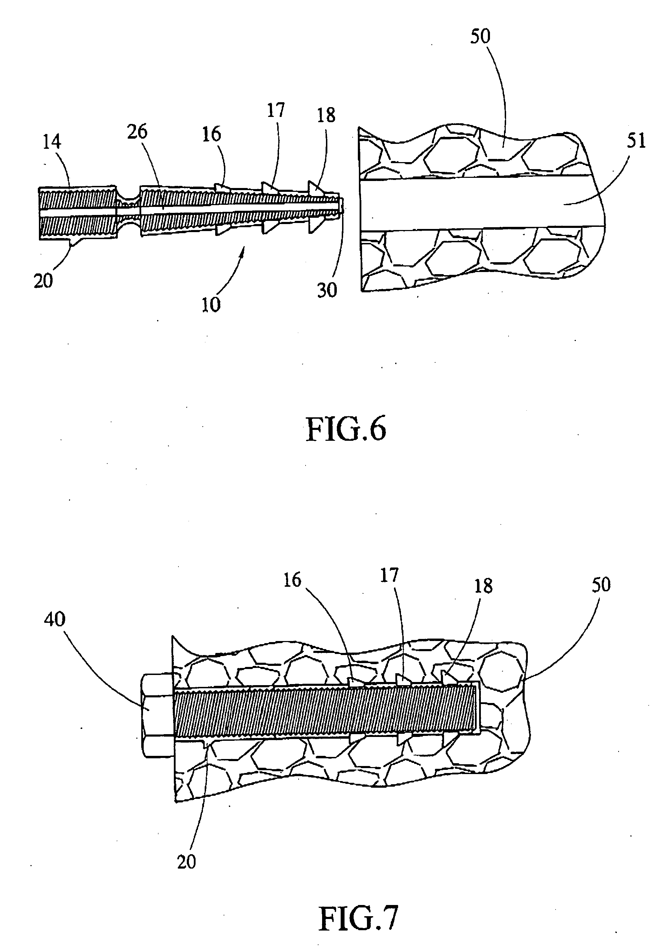

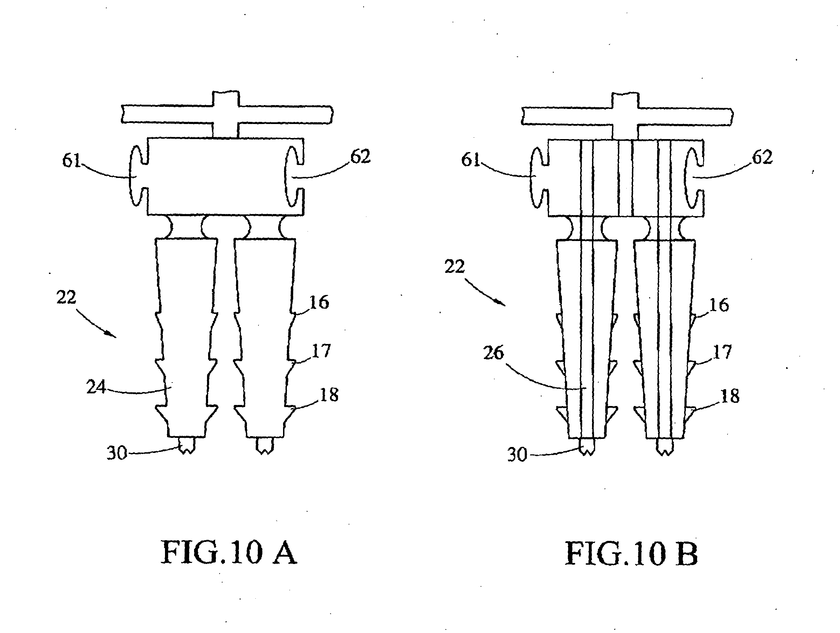

Please refer to Fig. 4 that is a perspective view showing an expansion mounting sleeve 10 according to a preferred embodiment of the present invention. A bolt 40 having suitable length, size, and screw threads for screwing into the expansion mounting sleeve 10 is also shown in Fig. 1. Fig. 5 is a perspective view showing the expansion mounting sleeve 10 with the bolt 40 screwed thereinto. As shown, the expansion mounting sleeve 10 includes a substantially straight cylindrical body formed by curling a metal material. A locking means 60 is formed at a joint of two edges of the curled metal material near a rear end of the cylindrical body of the expansion mounting sleeve 10 by way of stamping. The locking means 60 includes an ear section 61 protruded from one of the two joining edges, and a recess section 62 formed on the other joining edge opposite to the ear section 61 for engaging with the latter and thereby lock the two joining edges together (also refer to Fig. 10A). The cylindrical body of the sleeve 10 defines a bore 12, which is internally provided with a plurality of screw threads 14. The cylindrical body and the bore 12 of the sleeve 10 are tapered toward a front end the sleeve 10, and at least one engaging tooth 16 is projected from an outer surface of the sleeve 10. In the illustrated embodiment, a plurality of engaging teeth 16, 17, 18 having different lengths and shapes are projected from the outer surface of the sleeve 10. Moreover, one or more stopping tooth areas 20 are formed on the cylindrical body of the sleeve 10 (see Fig. 6).

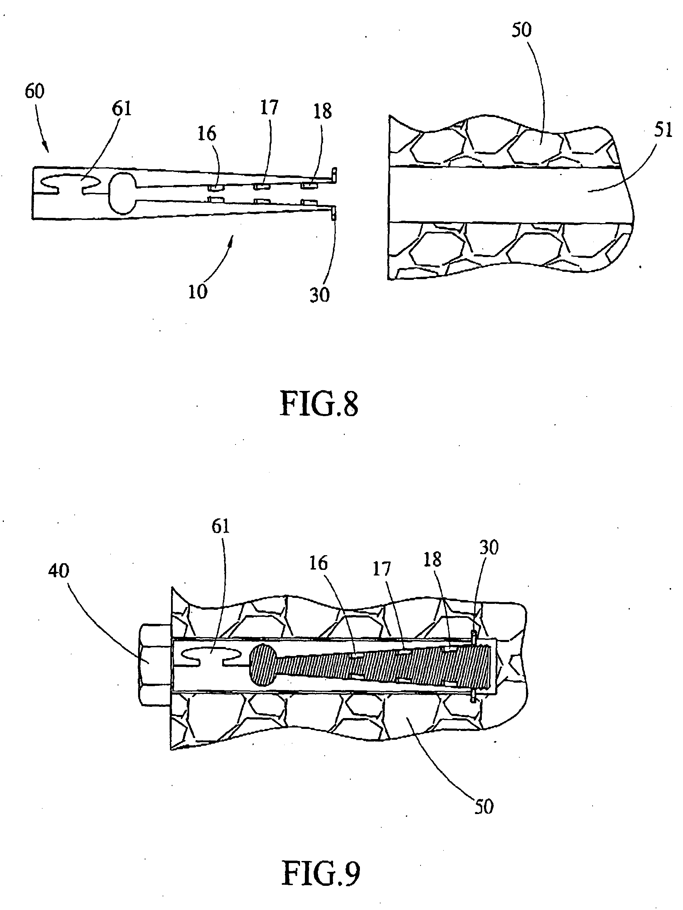

Figs. 6 to 9 are sectional views and partially sectioned views showing the manner of fastening a bolt to a hole 51 on a wall 50 via the expansion mounting sleeve 10, and the state in which the expansion mounting sleeve 10 is firmly pressed against an inner surface of the hole 51. As shown, the wall 50 is pre-drilled to provide the hole 51 for fitly receiving the expansion mounting sleeve 10 therein. Then, a bolt 40 having length, size, and screw threads matching the internal screw threads 14 is screwed into the bore 12 of the sleeve 10. When the bolt 40 is moved forward along the screw threads 14, it also pushes against the forward tapered bore 12, and thereby forces the forward tapered cylindrical body of the sleeve 10 to expand outward. At this point, the engaging teeth 17, 18, 19 are caused by the altered taper of the sleeve 10 to move outward like a stretched umbrella and therefore tightly engage with the wall of the hole 51 and hold the sleeve 10 in place in the hole 51.

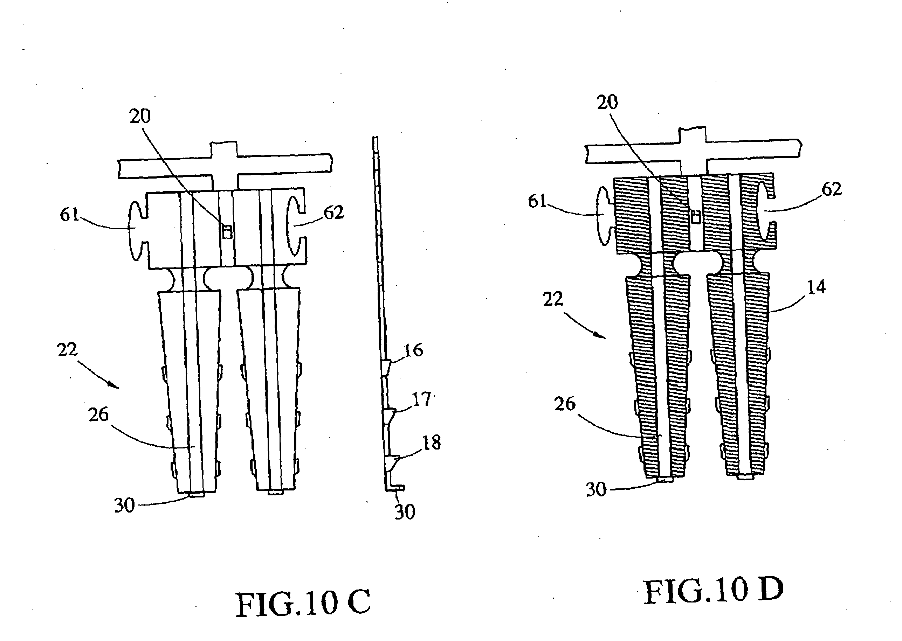

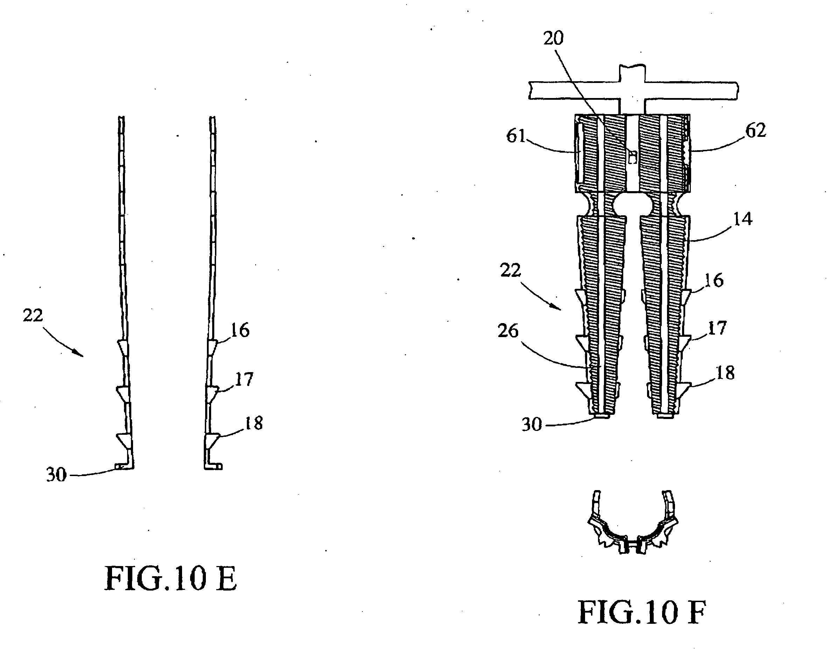

The expansion mounting sleeve 10 of the present invention is formed by stamping using progressive dies. Figs. 10A to 10H show in concrete the steps of forming the expansion mounting sleeve 10. First, prepare a material having dimensions required to produce the expansion mounting sleeve 10, and then form two or more tapered areas 22 on the material, as shown in Fig. 10A. Then, press the material in pre-defined thread forming areas 24 to form one or more slots 26 parallel to an axis of the material, as shown in Fig. 10B. Then, press the material again to form a barb 30 and/or more than one engaging tooth 16, 17, 18 in the tapered areas 22. It is noted the engaging teeth 16, 17, 18 have different heights which increase toward a front end of the tapered areas. The engaging teeth 16, 17, 18 are then bent toward an outer side of the material, as shown in Fig. 10C. Thereafter, press the material at the thread forming areas 24 to form screw threads 14 having a required size, as shown in Fig. 10D. The material is then pressed at the tapered areas 22 to form at least 1 degree of bending, as shown in Fig. 10E.

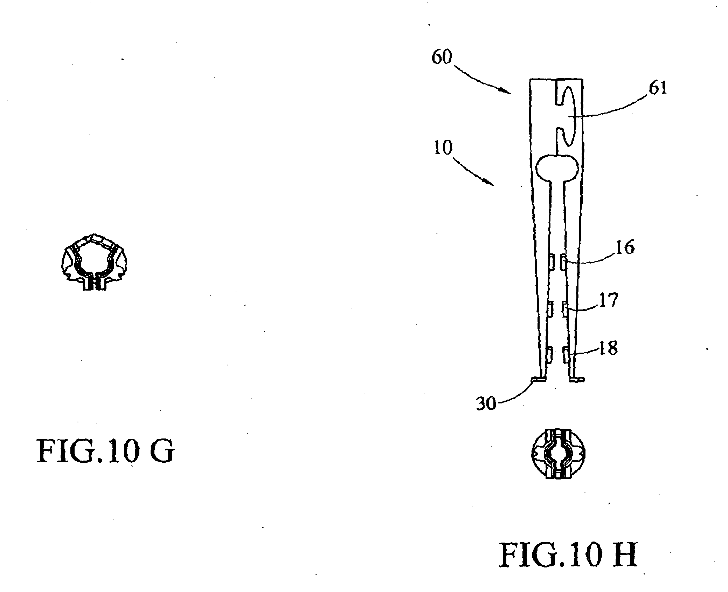

After the above steps are completed, the material is further stamped, so that the thread forming areas 24 are pressed into a U-sectioned shape, as shown in Fig. 10F. Then, the thread forming areas 14 are further curled, so that the whole material has a cross section approximate to a circle, as shown in Fig. 10G. When the thread forming areas 24 are fully curled to form a cylindrical body having a circular cross section, a locking structure 60, which consists of an ear section 61 and a recess section 62 correspondingly formed at two opposite edges of the material near a rear end thereof, is locked to hold the curled material in the formed cylindrical body, as shown in Fig. 10H. Finally, trim off the temporary connecting belt of material to obtain a finished product of the expansion mounting sleeve 10.

From the above described steps, it can be found that the expansion mounting sleeve 10 of the present invention is integrally formed by employing the existing well matured stamping and press forming techniques and designing high-precision progressive dies, and using the widely available materials. The expansion mounting sleeve 10 has the following advantages:
(1) The locking structure 60 effectively prevents the rear end of the cylindrical body of the sleeve 10 from being expanded and becoming loosened when the bolt 40 is screwed into the screw threads 14 from the rear end of the sleeve 10.
(2) The one or more stopping tooth areas 20 effectively prevent the sleeve 10 mounted in the hole 51 from rotating when the bolt 40 is initially screwed thereinto.
(3) Since the bore 12 of the sleeve 10 is internally threaded, and the bore 12 and the cylindrical body of the sleeve 10 are forward tapered, the bolt 40 of right size screwed into the sleeve 10 along the threads 14 would finally expand a front portion of the sleeve 10 into a fully straight cylindrical shape, and cause the engaging teeth 16, 17, 18 to move outward like a stretched umbrella to tightly engage with the wall 50 in the hole 51, and thereby firmly hold the sleeve 10 in place in the hole 51.
(4) The sleeve 10 is integrally formed by stamping through easy and quick processing procedures. A variety of usable materials may be selected for manufacturing the sleeve 10 without unnecessarily wasting the material. The associating bolt 40 may be an easily accessed ready-made bolt to facilitate 100% successful fastening operation using the bolt 40 and the expansion mounting sleeve 10 within shortened time period at reduced product and labor costs.
(5) The expansion mounting sleeve 10 may be integrally formed by stamping a cold-rolled metal strip using high-precision progressive dies at high productivity.
(6) The material for the expansion mounting sleeve 10 may be selected according to different applications. Among others, the widely available metal material can be conveniently used.
(7) The expansion mounting sleeve 10 is integrally formed by stamping a cold-rolled metal strip to simplify the manufacturing procedures and largely save the material, compared to various kinds of metal expansion bolt assemblies or mounting nuts manufactured using conventional processing techniques, such as turning, cold forging, etc. For example, in the turning cut expansion bolt assembly, a round bar must be turning cut and then subjected to a secondary processing of grooving to form an expansion sleeve, and a taper-headed bolt is cold forged to use with the sleeve; and in the cold forged expansion bolt assembly, a round bar must be cold forged to form a taper-headed bolt, which is then used with other parts; and in the turning cut mounting nut, a round bar must be turning cut.
(8) The expansion mounting sleeve 10 is made to use with ready-made bolts and screws. All bolts or screws having length, size, and screw threads matching the internally threaded bore 12 of the sleeve 10 may be selected for use. The sleeve 10 of the present invention is therefore superior to the conventional expansion bolt assemblies in terms of the compatibility of the sleeve with the bolt.
(9) It is very easy to use the expansion mounting sleeve 10 of the present invention to fasten a bolt or screw to a wall. To do so, simply drive the sleeve 10 into the hole 51 predrilled on the wall 50, and select a matching bolt or screw 40 to screw into the sleeve 10. A person of general skill may handle the sleeve 10 and the bolt 40 to complete the fastening operation within a short time.
(10) The expansion mounting sleeve 10 is firmly mounted in the hole 51 on the wall 50 when the bolt 40 is screwed into the threaded bore 12 of the sleeve 10 to expand the tapered front portion of the sleeve 10, which in turn causes the engaging teeth 16, 17, 18 to move outward and tightly engage with the wall 50 to hold the sleeve 10 in place in the hole 51. The sleeve 10 mounted in the hole 51 in this manner is absolutely prevented from idling or loosening in the hole 51.
(11) Since the sleeve 10 is in the form of a female member, the matching bolt 40 in the form of a male member does not project from the rear end of the sleeve 10 when the fastening operation is completed, giving the wall a visually pleasant surface and ensuring the tight attachment of the expansion mounting sleeve 10 and the bolt 40 to the wall 50.

In brief, the expansion mounting sleeve 10 of the present invention can be manufactured by integral stamping through simple and quick processing procedures. And, a variety of usable materials may be selected for manufacturing the sleeve 10. The bolt 40 for using with the sleeve 10 may be easily accessed from the ready-made products. And, the sleeve 10 may be efficiently driven into or mounted in a wall without the risk of becoming loosened from the wall.

## Claims

1. A method of forming an expansion mounting sleeve (10) by stamping using progressive dies, comprising the steps of:
preparing a material having dimensions needed to form said expansion mounting sleeve (10), forming at least two tapered areas (22) on the material, and defining thread forming areas (24) on the material;
pressing the material to form more than one slot (26) in said thread forming areas (24) such that the slots (26) are parallel to an axis of the material;
pressing the material to form at least one barb (30) and engaging tooth (16, 17, 18) in each of said tapered areas (22);
pressing the material to form screw threads (14) of a desired size in said thread forming areas (24);
pressing the material to form at least one degree of bending at said tapered areas (22);
pressing said thread forming areas (24) to form a U-sectioned shape;
further curling said thread forming areas (24) into a cylindrical body having a circular cross section; and
trimming off unnecessary temporary connecting material belt to complete one unit of said expansion mounting sleeve (10).

2. An expansion mounting sleeve (10), comprising a cylindrical body; said cylindrical body being tapered from near a rear end toward a front end, and said cylindrical body including at least one engaging tooth (16, 17, 18) protruded from an outer wall surface at the tapered portion of said cylindrical body, **characterized in that** the cylindrical body defines an internally threaded bore whith longitudinal slots in the thread areas (12) and is formed by curling a metal strip.

3. The expansion mounting sleeve (10) as claimed in claim 2, wherein said cylindrical body of said sleeve (10) has a plurality of said engaging teeth (16, 17, 18) in different heights and shapes.

4. The expansion mounting sleeve (10) as claimed in claim 3, wherein said cylindrical body of said sleeve (10) is further formed at predetermined positions with more than one stopping tooth areas (20) .

5. The expansion mounting sleeve (10) as claimed in claim 3, wherein said cylindrical body is formed near the rear end with a locking structure (60) consisting of a forward protruded ear section (61) and an opposite recess section (62) for receiving and engaging with said ear section (61), so as to hold the rear end of said cylindrical body in a cylindrical form.

## Patentansprüche

1. Verfahren zur Herstellung einer dehnbaren Befestigungshülse (10) mittels Stanzen unter Verwendung von progressiven Pressformen, umfassend die Schritte:
Vorbereiten eines Materials mit zur Ausbildung der dehnbaren Befestigungshülse (10) notwendigen Abmessungen, Ausbilden von mindestens zwei konisch ausgebildeten Bereichen (22) an dem Material, und Definieren von Gewindeformbereichen (24) an dem Material;
Pressen des Materials und Ausbilden von mehr als einem Schlitz (26) in den Gewindeformbereichen (24), so dass die Schlitze (26) parallel zu einer Achse des Materials ausgebildet sind;
Pressen des Materials und Formen mindestens eines Widerhakens (30) und eines Eingriffszahnes (16, 17, 18) in jeder der konisch ausgebildeten Bereiche (22);
Pressen des Materials und Formen von Schraubengewinden (14) einer gewünschten Größe in die Gewindeformbereiche (24) ;
Pressen des Materials und Formen mindestens eines Verbiegungsgrades in die konisch ausgebildeten Bereiche (22);
Pressen der Gewindeformbereiche (24) und Ausbilden eines U-förmigen Abschnittes;
Einrollen der Gewindeformbereiche (24) in einen zylinderförmigen, einen Kreisquerschnitt aufweisenden Körper; und
Abtrennen eines nicht notwendigen, vorübergehend vorgesehenen Materialverbindungsgurtes und Fertigstellen einer Einheit der ausdehnbaren Befestigungshülse (10).

2. Ausdehnbare Befestigungshülse (10), umfassend einen zylinderförmigen Körper, wobei der zylinderförmige Körper von nahe eines hinteren Endes zu einem vorderen Ende hin verjüngt ausgebildet ist, und der zylinderförmige Körper mindestens einen Eingriffszahn (16, 17, 18) aufweist, welcher von einer Außenwandfläche des verjüngt ausgebildeten Bereichs des zylinderförmigen Körpers hervorsteht, **dadurch gekennzeichnet, dass** der zylinderförmige Körper eine Innengewindebohrung (12) mit in den Gewindebereichen ausgebildeten Längsschlitzen aufweist und durch Einrollen eines Metallbandes ausgebildet ist.

3. Ausdehnbare Befestigungshülse (10) nach Anspruch 2, wobei der zylinderförmige Körper der Hülse (10) eine Vielzahl von Eingriffszähnen (16, 17, 18) in unterschiedlichen Höhen und Formen aufweist.

4. Ausdehnbare Befestigungshülse (10) nach Anspruch 3, wobei der zylinderförmige Körper der Hülse (10) ferner an vorbestimmten Positionen mehr als einen Anschlagszahnbereich (20) aufweist.

5. Ausdehnbare Befestigungshülse (10) nach Anspruch 3, wobei der zylinderförmige Körper in der Nähe des hinteren Endes eine Verriegelungseinrichtung (60) mit einem nach vorne herausragenden Ohrabschnitt (61) und einem gegenüberliegenden Ausnehmungsabschnitt (62) zur Aufnahme und zum Eingriff mit dem Ohrabschnitt (61) aufweist, so dass das hintere Ende des zylinderförmigen Körpers in einer zylinderförmigen Form gehalten ist.

## Revendications

1. Procédé pour former une cheville à douille d'expansion (10) par estampage en utilisant des moules progressifs, comprenant les étapes consistant à :
préparer un matériau ayant des dimensions requises pour former ladite cheville à douille d'expansion (10), former au moins deux zones progressivement rétrécies (22) sur le matériau et définir des zones de formation de filetage (24) sur le matériau ;
comprimer le matériau afin de former plus d'une fente (26) dans lesdites zones de formation de filetage (24) de sorte que les fentes (26) sont parallèles à un axe du matériau ;
comprimer le matériau afin de former au moins un ardillon (30) et mettre en prise la dent (16, 17, 18) dans chacune desdites zones progressivement rétrécies (22);
comprimer le matériau afin de former des filetages de vis (14) d'une taille souhaitée dans lesdites zones de formation de filetage (24);
comprimer le matériau afin de former au moins un degré de flexion au niveau desdites zones progressivement rétrécies (22);
comprimer lesdites zones de formation de filetage (24) afin de former une forme de U en coupe ;
enrouler en outre lesdites zones de formation de filetage (24) en un corps cylindrique ayant une section transversale circulaire ; et
couper la ceinture de matériau de raccordement temporaire inutile afin de terminer une unité de ladite cheville à douille d'expansion (10).

2. Cheville à douille d'expansion (10) comprenant un corps cylindrique; ledit corps cylindrique étant progressivement rétréci à partir du voisinage d'une extrémité arrière vers une extrémité avant, et ledit corps cylindrique comprenant au moins une dent de mise en prise (16, 17, 18) en saillie à partir d'une surface de paroi externe au niveau de la partie progressivement rétrécie dudit corps cylindrique, **caractérisé en ce que** ledit corps cylindrique définit un alésage intérieurement fileté (12) avec des fentes longitudinales dans les zones de filetage et est formé en enroulant une bande de métal.

3. Cheville à douille d'expansion (10) selon la revendication 2, dans laquelle ledit corps cylindrique de ladite cheville (10) a une pluralité desdits dents de mise en prise (16, 17, 18) de différentes hauteurs et différentes formes.

4. Cheville à douille d'expansion (10) selon la revendication 3, dans laquelle ledit corps cylindrique de ladite cheville (10) est en outre formé dans des positions prédéterminées avec plus d'une zone de dent de butée (20).

5. Cheville à douille d'expansion (10) selon la revendication 3, dans laquelle ledit corps cylindrique est formé à proximité de l'extrémité arrière avec une structure de blocage (60) se composant d'une section formant oreille en saillie vers l'avant (61) et d'une section formant évidement opposée (62) pour recevoir et se mettre en prise avec ladite section formant oreille (61), afin de maintenir l'extrémité arrière dudit corps cylindrique dans une forme cylindrique.
